(19) Europäisches Patentamt
European Patent Office
Office européen des brevets

(11) EP 1 243 832 B1

(12) **FASCICULE DE BREVET EUROPEEN**

(45) Date de publication et mention de la délivrance du brevet:
**24.05.2006 Bulletin 2006/21**

(21) Numéro de dépôt: **02290621.8**

(22) Date de dépôt: **12.03.2002**

(51) Int Cl.:
*F16L 11/06* (2006.01) *F16L 11/12* (2006.01)

# (54) Tube multicouche à base de polyamides et de fluoropolymère pour le transport d'essence

Mehrschichtiges Rohr aus Polyamiden und Fluoropolymeren für den Kraftstofftransport

Multilayer pipe made of polyamides and fluoropolymer for conveying fuel

(84) Etats contractants désignés:
**AT BE CH CY DE DK ES FI FR GB GR IE IT LI LU MC NL PT SE TR**

(30) Priorité: **23.03.2001 FR 0103932**

(43) Date de publication de la demande:
**25.09.2002 Bulletin 2002/39**

(73) Titulaire: **Arkema**
**92800 Puteaux (FR)**

(72) Inventeurs:
- **Bussi, Philippe**
  **76000 Rouen (FR)**
- **Pery, Frédérique**
  **27800 Saint-Cyr de Salerne (FR)**

(74) Mandataire: **Neel, Henry et al**
**ARKEMA**
**Département Propriété Industrielle**
**4-8, cours Michelet,**
**La Défense 10**
**92091 Paris La Défense Cedex (FR)**

(56) Documents cités:
**EP-A- 0 731 308**
**WO-A-95/11947**
**FR-A- 2 794 837**
**EP-A- 1 002 977**
**DE-A- 3 220 380**
**US-A- 5 884 671**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 243 832 B1

## Description

[Domaine de l'invention]

La présente invention concerne des tubes à base de polyamides et de fluoropolymère pour le transport d'essence et en particulier pour amener l'essence du réservoir d'une automobile jusqu'au moteur.

Pour des raisons de sécurité et de préservation de l'environnement les constructeurs d'automobiles imposent à ces tubes à la fois des caractéristiques mécaniques comme la résistance à l'éclatement et la flexibilité avec une bonne tenue aux chocs à froid (-40˚C) ainsi qu'à température élevée (125˚C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur. Ces tubes sont fabriqués par coextrusion des différentes couches selon les techniques habituelles des thermoplastiques.

[l'art antérieur et le problème technique]

Parmi les caractéristiques du cahier des charges de ces tubes, cinq sont particulièrement difficiles à obtenir conjointement de façon simple :

- tenue aux chocs à froid (-40˚C), le tube ne se brise pas,
- tenue aux carburants
- tenue à température élevée (125˚C),
- très faible perméabilité à l'essence,
- une bonne stabilité dimensionnelle du tube en utilisation avec de l'essence.

Dans les tubes multicouches de structures diverses, la tenue aux chocs à froid reste imprévisible avant d'avoir réalisé les tests normés de résistance aux chocs à froid.

Par ailleurs, il est déjà connu de la demande de brevet EP 0781799 que dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à $10^6$ ohms. Il est connu d'abaisser la résistivité superficielle de résines ou matériaux polymériques en leur incorporant des matériaux conducteurs et/ou semiconducteurs tels que le noir de carbone, les fibres en acier, les fibres de carbone, les particules (fibres, plaquettes, sphères) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charge augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsque un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

On connait aussi de la demande de brevet EP 0 731 308 des tubes à base de polyamides pour le transport d'essence. Ces tubes peuvent avoir une structure tricouche, la couche intérieure comprenant un mélange de polyamide et de polyoléfine à matrice polyamide, la couche extérieure comprenant un polyamide, une couche de liant de coextrusion à base de polyoléfine greffée étant disposée entre la couche intérieure et la couche extérieure. Ces tubes ont une très bonne tenue aux chocs mais la perméabilité à l'essence est encore trop élevée.

Le brevet EP 558373 décrit un tube pour le transport d'essence comprenant respectivement une couche extérieure en polyamide, une couche de liant et une couche intérieure en contact avec l'essence et constituée de polymère fluoré. La perméabilité à l'essence est parfaite mais la tenue aux chocs n'est pas suffisante.

Les brevets EP 696301, EP 740754 et EP 726926 décrivent des tubes pour le transport d'essence comprenant

respectivement une couche extérieure en polyamide, une couche de liant, une couche de PVDF (polyfluorure de vinylidène), une couche de liant et une couche intérieure en polyamide en contact avec l'essence. La perméabilité et la tenue aux chocs sont très bons mais selon la nature du polyamide et le dispositif de coextrusion utilisé pour fabriquer ce tube il peut être nécessaire d'ajouter un plastifiant dans la couche intérieure de polyamide. Il en résulte que ce plastifiant peut exsuder et être entrainé par l'essence ce qui peut provoquer un bouchage du tube ou du dispositif d'injection de l'essence dans le moteur.

Le but de la présente invention est de proposer un autre tube à base de polyamides ayant une structure d'au moins trois couches et répondant aux caractéristiques actuelles du cahier des charges des constructeurs. Le tube de l'invention comprend une couche extérieure de polyamide, une couche constituée d'un mélange d'un fluoro polymère et d'un méthacrylate d'alcoyle possédant sur sa chaîne des fonctions réactives et une couche intérieure constituée d'un mélange à matrice polyamide et phase dispersée en polyoléfine en contact avec l'essence.

L'avantage de ce tube est que le mélange d'un fluoro polymère et d'un méthacrylate d'alcoyle possèdant sur sa chaîne des fonctions réactives a des propriétés d'adhésion fortes respectivement avec des polyamides et des mélanges de polyamide et de polyoléfine. De plus, ce mélange de fluoropolymère et de méthacrylate d'alcoyle adhère bien à des polyamides ou à des polymères à matrice polyamide contenant du noir de carbone électroconducteur et qui présentent de ce fait des propriétés antistatiques ou de conductivité électrique. De plus il n'est pas nécessaire d'ajouter de plastifiant dans le mélange à matrice polyamide et phase dispersée en polyoléfine de la couche en contact avec l'essence.

[Brève description de l'invention]

La présente invention concerne un tube multicouche à base de polyamides comprenant dans sa direction radiale de l'extérieur vers l'intérieur au moins:

- une couche extérieure formée d'un polyamide,
- une couche intermédiaire formée d'un mélange d'un fluoropolymère et d'un polyméthacrylate d'alcoyle tel que défini dans la revendication 1,
- une couche intérieure, en contact avec l'essence, formée d'un mélange à matrice polyamide et contenant une phase dispersée polyoléfinique, cette couche pouvant contenir du noir de carbone,

Les couches étant successives et adhérentes entre-elles dans leur zone de contact respective.

Si la couche intérieure contient du noir de carbone le tube est dit "antistatique". Avantageusement la proportion de noir de carbone est telle que la résistivité surfacique est inférieure à $10^6$ Ω.

Selon une autre forme de l'invention la couche intérieure est remplacée par deux couches, l'une formée d'un mélange à matrice polyamide et contenant une phase dispersée polyoléfinique, l'autre formée d'un mélange à matrice polyamide contenant une phase dispersée polyoléfinique et du noir de carbone, la couche chargée de noir de carbone étant en contact avec l'essence. Avantageusement la proportion de noir de carbone est telle que la résistivité surfacique est inférieure à $10^6$ Ω.

Avantageusement, le tube selon l'invention a un diamètre extérieur allant de 6 à 12 mm, une épaisseur totale de 0,36 mm à 1,95 mm,
une épaisseur de 50 à 700 μm pour la couche extérieure en polyamide
une épaisseur de 50 à 300 μm pour la couche de mélange de fluoropolymère et de méthacrylate d'alcoyle,
une épaisseur de 50 à 600 μm pour la couche intérieure de mélange à matrice polyamide contenant une phase dispersée polyoléfinique,
une épaisseur de 50 à 300 μm pour la couche intérieure chargée de noir de carbone dans la forme de l'invention ou il y a deux couches interieures.

Le tube de l'invention peut comprendre une couche supplémentaire constituée de chutes de fabrication ou de tubes de l'invention présentant des défauts, ces chutes ou ces tubes sont broyés puis fondus et coextrudés avec les autres couches. Cette couche peut se situer entre la couche extérieure et la couche intermédiaire ou entre la couche intermédiaire et la couche intérieure.

Le tube de la présente invention est très peu perméable à l'essence et à ses additifs et présente de très bonnes propriétés mécaniques à basse ou à haute température. De plus en ajoutant du noir dans la couche intérieure il devient antistatique. Un autre avantage est que la couche intérieure en contact avec l'essence n'exsude pas.

[Description détaillée de l'invention]

**S'agissant de la couche extérieure**, par polyamide au sens de la présente invention, on entend les polyamides ou PA qui contiennent des motifs aliphatiques et/ou cycloaliphatiques et/ou aromatiques.

On peut citer les polyamides obtenus par polycondensation d'un ou plusieurs lactames, les $\alpha,\omega$-aminoacides préférés sont les acides 10-aminodécanoïque, 11-aminoundécanoïque, 12-aminododécanoïque.

Les diamines aliphatiques sont des $\alpha,\omega$-diamines contenant entre les groupes amino terminaux au moins 6 atomes de carbone, de préférence de 6 à 10. La chaîne carbonée peut être linéaire (polyméthylènediamine) ou ramifiée ou encore cycloaliphatique. Des diamines préférées sont l'hexaméthylènediamine (HMDA) ,la dodécaméthylènediamine, la décaméthylènediamine.

Les diacides carboxyliques peuvent être aliphatiques, cycloaliphatiques ou aromatiques. Les diacides carboxyliques aliphatiques sont des $\alpha,\omega$-diacides carboxyliques possédant au moins 4 atomes de carbone (non compris les atomes de carbone des groupes carboxyliques), de préférence au moins 6, dans la chaîne carbonée linéaire ou ramifiée. Les diacides sont les acides azélaïque, sébacique et 1,12-dodécanoïque. A titre d'illustration de tels PA, on peut mentionner :

le polyhexaméthylènesebacamide (PA-6,10),
le polyhexaméthylènedodécanediamide (PA-6,12),
le poly(undécanoamide) (PA-11),
le poly(laurolactame (2-Azacyclotridécanone) (PA-12),
le polydodécaméthylènedodécanediamide (PA-12,12),
le polycapronamide (PA-6),
le polyhexaméthylèneadipamide (PA-6,6).

Les PA ont une masse moléculaire moyenne en nombre $\overline{M}n$ en général supérieure ou égale à 5000. Leur viscosité inhérente (mesurée à 20°C pour un échantillon de 0,5 g dans 100 g de méta-crésol) est en général supérieure à 0,7.

Avantageusement, on utilise le polyamide 12 ou le polyamide 11. Avantageusement, le polyamide de la couche extérieure est plastifié par des plastifiants usuels tels que le n-butyl benzène sulfonamide (BBSA) et les copolymères comprenant des blocs polyamides et des blocs polyéthers.

Les copolymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Les séquences polyamides à bouts de chaînes diamines proviennent, par exemple, de la condensation d'acides alpha-oméga aminocarboxyliques, de lactames ou de diacides carboxyliques et diamines en présence d'une diamine limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre $\overline{M_n}$ des séquences polyamides est comprise entre 300 et 15 000 et de préférence entre 600 et 5 000. La masse $\overline{M_n}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inherente entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10 / 90 et 60 / 40. On peut citer par exemple le copolymère à blocs PA 6 et blocs PTMG et le copolymère à blocs PA 12 et blocs PTMG.

**S'agissant de la couche intermédiaire et d'abord du fluoropolymère (ou polymère fluoré)** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VF2); le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene.

Le polymère fluoré peut être un homopolymère ou un copolymère, il peut aussi comprendre des monomères non fluorés tels que l'éthylène.

Avantageusement, le polymère fluoré est choisi parmi :

- Les homo- et copolymères du fluorure de vinylidène (VF2) contenant de préférence au moins 50% en poids de VF2, le copolymère étant choisi parmi le chlorotrifluoroéthylène (CTFE), l'hexafluoropropylène (HFP), le trifluoroéthylène (VF3) et le tétrafluoroéthylène (TFE),
- Les homo- et copolymères du trifluoroéthylène (VF3),
- Les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

De préférence, le polymère fluoré est du poly(fluorure de vinylidène) (PVDF) homopolymère ou PVDF copolymère ayant au moins 70% en poids de restes VF2.

**S'agissant de la couche intermédiaire et particulièrement du polyméthacrylate d'alcoyle** il est caractérisé en ce qu'il contient des motifs :

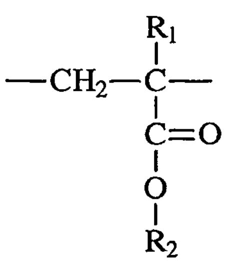

Motif (1) Dans lequel

$R_1$ représente H ou un alkyle linéaire ou ramifié ayant de 1 à 20 atomes de carbone ; et

$R_2$ identique ou différent de $R_1$ lorsque celui-ci ne représente pas H, représente un alkyle linéaire ou ramifié ayant de 1 à 20 atomes de carbone, et des motifs :

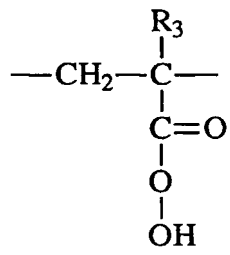

Motif (2) Dans lequel :
$R_3$ représente H ou un alkyle linéaire ou ramifié ayant de 1 à 20 atomes de carbone,
Sous forme acide, ou ses dérivés anhydrides ou des mélanges de ceux-ci.

Lorsque le motif (2) est présent sous sa forme anhydride, il est représenté par la formule :

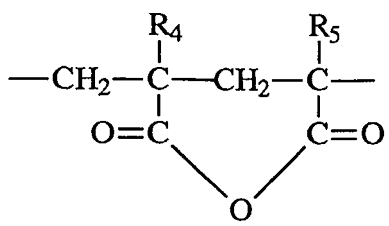

Motif (3) Dans lequel
$R_4$ et $R_5$, identiques ou différents, représentent H ou un alkyle linéaire ou ramifié ayant de 1 à 20 atomes de carbone.

Le terme « motif (2), sous forme acide ou ses dérivés anhydrides ou des mélanges de ceux-ci » couvre notamment les cas suivants :les motifs (2) sont essentiellement sous forme acide ;les motifs (2) sont essentiellement sous forme anhydride, des mélanges de motifs (2) sous forme acide et sous forme anhydride, des mélanges de motifs (2) où les radicaux $R_3$, ou $R_4$ et $R_5$ sont variables. La formule donnée pour le motif(2) comprend aussi de façon générale les motifs portant une fonctionnalité acide. Les motifs (1) similairement peuvent être des mélanges lorsque les radicaux $R_1$ et $R_2$ sont variables.

Selon un mode de réalisation, le polymère utilisé comprend en moles, jusqu'à 30% de motif (2), sous forme acide, ou son dérivé anhydride ou leurs mélanges. Avantageusement, le polymère utilisé comprend, en moles, jusqu'à 15% de motif (2), sous forme acide, ou son dérivé anhydride ou leurs mélanges.

Selon un autre mode de réalisation, dans le motif (2) du polymère A, $R_3$ représente le radical hydrogène ou méthyle dans le cas où le motif(2) est sous forme acide, et R4 et R5 représentent le radical hydrogène ou méthyle dans le cas où le motif (2) est sous forme anhydride.

Avantageusement le polyméthacrylate d'alcoyle est le PMMA comprenant des motifs acide methacrylique copolymerisés. Les polymères utilisés mentionnés ci-avant peuvent être préparés par tout procédé approprié connu dans l'art. On citera par exemple le procédé décrit dans EP-A-216505.

Avantageusement la proportion de polymère fluoré dans la couche intermédiaire est de 40 parties (en poids) à 95 parties pour respectivement 60 à 5 parties de polyméthacrylate d'alcoyle. De préference la proportion de polymère fluoré dans la couche intermédiaire est de 70 parties (en poids) à 95 parties pour respectivement 30 à 5 parties de polyméthacrylate d'alcoyle.

**S'agissant de la couche intérieure**, en contact avec l'essence, formée d'un mélange à matrice polyamide et contenant une phase dispersée polyoléfinique, on décrit ci dessous des exemples de mélanges à matrice polyamide et contenant une phase dispersée polyoléfinique. Ces compositions concernent la couche intérieure aussi bien sous forme d'une couche que sous forme de deux couches. S'agissant de la forme de l'invention dans laquelle il y a deux couches interieures elles peuvent être identiques ou différentes. Les compositions suivantes sont exprimées en pourcentage par rapport au polyamide et la phase dispersée polyolefinique, c'est à dire que la somme du polyamide et de la phase dispersée polyoléfinique fait 100%. Cette couche intérieure peut néanmoins contenir des charges, des stabilisants, des anti U.V. et des antioxydants. Elle peut aussi contenir du noir de carbone avantageusement en quantité suffisante pour que la résistivité surfacique soit inférieure à $10^6$ Ω. Cette quantité de noir est habituellement comprise entre 5 et 30 parties en poids de noir pour 100 parties de l'ensemble du polyamide et de la phase dispersée polyoléfinique. **Par simplification dans la suite du texte le polyamide de la matrice de cette couche intérieure est désigné par (A) et la phase dispersée polyoléfinique par (B).**

S'agissant du polyamide (A) on entend par polyamide les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6 et le PA 6-6.
On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.
A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame.
A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque $HOOC-(CH_2)_{10}-COOH$.
La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis (aminocyclohéxyl) méthane (BACM), la bis(3-méthyl-4 aminocyclohéxyl) méthane (BMACM).
A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).
Avantageusement le copolyamide est choisi parmi le PA 6 / 12 et le PA 6 / 6-6. L'avantage de ces copolyamides est leur température de fusion inferieure à celle du PA 6.
On peut aussi utiliser tout polyamide amorphe sans point de fusion.
Le MFI des polyamides et des mélanges de polyamide et de polyoléfine de la présente invention est mesuré selon les règles de l'art à une température de 15 à 20°C au-dessus de la température de fusion du polyamide. S'agissant des mélanges à base de PA 6 le MFI est mesuré à 235°C sous 2,16 kg. S'agissant des mélanges à base de PA 6-6 le MFI est mesuré à 275°C sous 1 kg.
On peut utiliser des mélanges de polyamide. Avantageusement le MFI des polyamides est compris entre 1 et 50 g/10 min.
On ne sortirait pas du cadre de l'invention en remplaçant une partie du polyamide (A) par un copolymère à blocs polyamide et blocs polyether, c'est à dire en utilisant un mélange comprenant au moins un des polyamides précédents et au moins un copolymère à blocs polyamide et blocs polyether.
Les copolymères à blocs polyamides et blocs polyéthers ont déjà été définis dans la description des plastifiants de la couche extérieure.
Quant à la polyoléfine (B) du mélange de polyamide (A) et de phase dispersée polyoléfinique (B) elle peut être fonctionnalisée ou non fonctionnalisée ou être un mélange d'au moins une fonctionnalisée et/ou d'au moins une non fonctionnalisée. Pour simplifier on a décrit ci dessous des polyoléfines fonctionnalisées (B1) et des polyoléfines non fonctionnalisées (B2).
Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse

densité) et le polyéthylène métallocène.

- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth) acrylate de glycidyle, ou par des acides carboxyliques ou les sels ou esters correspondants tels que l'acide (méth) acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères.

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI de (A), les MFI de (B1) et (B2) peuvent être choisis dans une large plage il est cependant recommandé pour faciliter la dispersion de (B) que le MFI de (A) soit plus grand que celui de (B).

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1)/(B2) allant de 5/35 à 15/25. On peut aussi pour de faibles proportions de (B) n'utiliser qu'un mélange de polyoléfines (B1) pour obtenir une réticulation.

**Selon une première forme préférée de l'invention** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

**Selon une variante de cette première forme de l'invention** la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

**Selon une deuxième forme préférée de l'invention** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée de l'invention** la polyoléfine (B) comprend (i) un polyéthylène de type LLDPE, VLDPE ou metallocene et (ii) un copolymère éthylène -(meth)acrylate d'alkyle -anhydride maléique.

**Selon une quatrième forme préférée de l'invention** le polyamide (A) est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40. Selon une première variante la polyoléfine (B) comprend (i) un polyéthylène de type LLDPE , VLDPE ou metallocène et (ii) un copolymère éthylène -(meth)acrylate d'alkyle -anhydride maléique; selon une deuxième variante la polyoléfine comprend deux polymères fonctionnalisés comprenant au moins 50 % en moles de motifs éthylène et pouvant réagir pour former une phase réticulée.

**S'agissant de la première forme** les proportions sont avantageusement les suivantes (en poids) :

60 à 70 % de polyamide,
5 à 15 % du mélange de (C1) et (C2) cogreffé
le complément en polyéthylène haute densité .

S'agissant du polyéthylène haute densité sa densité est avantageusement comprise entre 0,940 et 0,965 et le MFI entre 0.1 et 5 g/10 min. (190°C 2,16 kg).
Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène / propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters

vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/10 min. (190°C - 2,16 kg) de préférence 13 à 20.

Avantageusement le mélange de (C1) et (C2) cogreffés, est tel que le rapport $MFI_{10}$ / $MFI_2$ est supérieur à 18,5, $MFI_{10}$ désignant l'indice d'écoulement à 190°C sous une charge de 10 kg et $MFI_2$ l'indice sous une charge de 2,16 kg. Avantageusement le $MFI_{20}$ du mélange des polymères (C1) et (C2) cogreffés est inférieur à 24. $MFI_{20}$ désigne l'indice d'écoulement à 190°C sous une charge de 21,6 kg.

**S'agissant de la variante de la première forme** les proportions sont avantageusement les suivantes (en poids) :

60 à 70 % de polyamide,
5 à 10 % de (C2) greffé,
5 à 10 % de (C'2)
le complément en polyéthylène haute densité .

(C2) est avantageusement un EPR ou un EPDM, (C'2) est avantageusement un EPR contenant en poids 70 à 75% d'éthylène.

**S'agissant de la deuxième forme de l'invention** les proportions sont avantageusement les suivantes (en poids) :

60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth)acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP

342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule

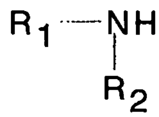

dans laquelle :

$R_1$ est l'hydrogène ou un groupement alkyle linéaire ou ramifié contenant jusqu'à 20 atomes de carbone,
$R_2$ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :

60 à 70 % de polyamide,
5 à 15 % d'un copolymère éthylène -(meth)acrylate d'alkyle -anhydride maléique.
le complément est un polyéthylène de type LLDPE , VLDPE ou metallocene; avantageusement la densité de ce polyethylene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**S'agissant de la quatrième forme** les proportions sont avantageusement les suivantes (en poids) :

**Selon une première** variante:

60 à 70 % du mélange de polyamide et de copolymère à blocs polyamide et blocs polyether,
5 à 15 % d'un copolymère éthylène -(meth)acrylate d'alkyle -anhydride maléique.
le complément est un polyéthylène de type LLDPE , VLDPE ou métallocène; avantageusement sa densité est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**Selon une deuxième variante:**

40 à 95 % du mélange de polyamide et de copolymère à blocs polyamide et blocs polyether,

60 à 5 % d'un mélange d'un copolymère éthylène -(meth)acrylate d'alkyle -anhydride maléique et d'un copolymère éthylène -(meth)acrylate d'alkyle -methacrylate de glycidyle.

Le copolymère à l'anhydride a été défini dans la première variante, Le copolymère éthylène/(méth)acrylate d'alkyle/ methacrylate de glycidyle peut contenir jusqu'à 40% en poids de (méth)acrylate d'alkyle, avantageusement de 5 à 40 % et jusqu'à 10% en poids d'époxyde insaturé, de préférence 0,1 à 8%. Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est de préférence de 20 à 35%. Le MFI est avantageusement compris entre 5 et 100 (en g/10 min à 190°C sous 2,16 kg), la température de fusion est comprise entre 60 et 110°C. Ce copolymère peut être obtenu par polymérisation radicalaire des monomères.

On peut ajouter des catalyseurs pour accélérer la réaction entre les fonctions époxy et anhydride, parmi les composés capables d'accélérer la réaction entre la fonction epoxy et la fonction anhydride on peut citer notamment :

- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-I-imidazole, la tétraméthyléthylhydrazine, la N,N-diméthylpipérazine, la N,N,N',N'-tétraméthyl-I,6-hexanediamine, un mélange d'amines tertiaires ayant de 16 à 18 carbones et connues sous l'appellation de diméthylsuifamine,
- des phosphines tertiaires telles que la triphénylphosphine
- des alkyldithiocarbamates de zinc.
- des acides.

les compositions des différentes couches peuvent être effectuées par les techniques habituelles de mélange des constituants à l'état fondu dans lequel on ajoute les autres constituants tels que les charges éventuelles (noir de carbone, anti U.V. etc ... ). Le tube est fabriqué avantageusement par coextrusion.

[Exemples]

On a utilisé les produits suivants:

**HT121** : PMMA vendu par ATOGLAS® , copolymère de MMA et d'acide méthacrylique à 3,8% d'acide et de MFI 2 g/10 min (230°C, 3,8kg).
**Kynar® :** PVDF homopolymère de MVI (Melt Volume Index ou indice de fluidité en volume à l'état fondu) 10 $cm^3$/10 min (230°C, 5kg).
**PA 12 :** mélange comprenant:

- 85 % de polyamide 12 ayant une viscosité inhérente de 1,65
- 7 % de n-butylbenzène sulfonamide (BBSA)
- 6 % d'élastomère thermoplastique à base de polyétherblocamide de dureté shore D égale à 55 et de point de fusion 159°C
- 2 % d'additifs (colorants, lubrifiants, stabilisants).

**Orgalloy® :** mélange comprenant :

- 65 parties en poids de PA-6 de MFI 23 g/10 min à 235°C sous 2,16 kg, formant matrice,
- 25 parties en poids de polyéthylène HDPE de densité 0,953 et de melt index 0,3 g / 10 min sous 2,16 kg à 190°C
- 10 parties de polyéthylène greffé anhydride maléique, de melt index 0,4 g /10 min 190°C, 2,16 kg et de température de fusion 134°C.

Les résultats de choc GM sont exprimés en nombre de tubes cassés ou fendus pour dix tubes impactés. La norme prévoit qu'une structure passe le choc GM 213M s'il n'y a aucune casse ou fissure pour dix tubes impactés (0/10), sinon la structure n'est pas considérée satisfaisante. Il est important de noter qu'une fissure fine peut ne pas être détectée à l'oeil. La norme prévoit que la pression d'éclatement du tube soit mesurée avant et après le test de choc. Pour qu'un tube passe le test il est nécessaire que la pression d'éclatement après le choc soit au moins égale à 80% de la valeur de la pression d'éclatement mesurée sur le tube avant le test de choc.

On a fabriqué par coextrusion des tubes à trois couches de diamètre extérieur 8 mm et d'épaisseur 1 mm. Ces tubes présentent un niveau d'adhérence élevé avant et après vieillissement ainsi qu'une perméabilité faible. Ces deux tubes passent le test du choc GM à -40°C.

Dans le tableau 1 sont résumés les différents tubes ayant été testés :

Tableau 1 : Tubes ayant été coextrudés.

| Ref tube | couche extérieure | couche intermediaire 200 μm μm | Couche interieure | Adhérence PA exterieur sur couche intermediaire tube non vieilli (N/cm) | Adhérence couche interne sur liant après perméabilité statique 37 jrs (N/cm) | Perméabilité statique à l'essence M15 à 60°C (g/m$^2$.24h) | Choc GM (-40°C) % de casse % de casse |
|---|---|---|---|---|---|---|---|
| Tube 1 | PA 12 400 μm | PVDF / HT 121 92.5 / 7.5 | Orgalloy® 400 μm | 38 | 25 | 50 | 0 |
| Tube 2 | PA 12 600 μm | PVDF / HT 121 92.5 / 7.5 | Orgalloy® 200 μm | 43 | 19 | 49 | 0 |

## Revendications

**1.** Tube multicouche à base de polyamides comprenant dans sa direction radiale de l'extérieur vers l'intérieur au moins:

- une couche extérieure formée d'un polyamide,
- une couche intermédiaire formée d'un mélange d'un fluoropolymère et d'un polyméthacrylate d'alcoyle,
- une couche intérieure, en contact avec l'essence, formée d'un mélange à matrice polyamide et contenant une phase dispersée polyoléfinique, cette couche pouvant contenir du noir de carbone,

Les couches étant successives et adhérentes entre-elles dans leur zone de contact respective et le polyméthacrylate d'alcoyle contient des motifs :

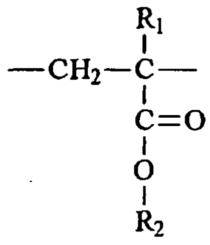

Motif (1) Dans lequel
$R_1$ représente H ou un alkyle linéaire ou ramifié ayant de 1 à 20 atomes de carbone ; et
$R_2$ identique ou différent de $R_1$ lorsque celui-ci ne représente pas H, représente un alkyle linéaire ou ramifié ayant de 1 à 20 atomes de carbone, et des motifs :

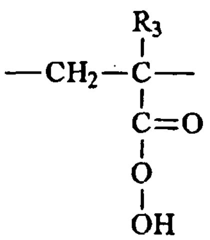

Motif (2) Dans lequel :
$R_3$ représente H ou un alkyle linéaire ou ramifié ayant de 1 à 20 atomes de carbone, sous forme acide, ou ses dérivés anhydrides ou des mélanges de ceux-ci.

2. Tube selon la revendication 1 dans lequel la couche intérieure est remplacée par deux couches, l'une formée d'un mélange à matrice polyamide et contenant une phase dispersée polyoléfinique, l'autre formée d'un mélange à matrice polyamide contenant une phase dispersée polyoléfinique et du noir de carbone, la couche chargée de noir de carbone étant en contact avec l'essence.

3. Tube selon l'une quelconque des revendications précédentes dans lequel la proportion de noir de carbone de la couche interieure est telle que la résistivité surfacique est inférieure à $10^6\ \Omega$.

4. Tube selon l'une quelconque des revendications précédentes qui comprend une couche supplémentaire constituée de chutes de fabrication ou de tubes de l'invention présentant des défauts, cette couche étant entre la couche extérieure et la couche intermédiaire ou entre la couche intermédiaire et la couche intérieure.

5. Tube selon l'une quelconque des revendications précédentes dans laquel le polyamide de la couche extérieure est le PA 11 ou le PA 12.

6. Tube selon l'une quelconque des revendications précédentes dans lequel le polymère fluoré de la couche intermédiaire est le PVDF homopolymère ou copolymère comprenant au moins 50% en poids de motifs VF2 le copolymère étant choisi parmi le chlorotrifluoroéthylène (CTFE), l'hexafluoropropylène (HFP), le trifluoroéthylène (VF3) et le tétrafluoroéthylène (TFE).

7. Tube selon l'une quelconque des revendications précédentes dans lequel le polyméthacrylate d'alcoyle de la couche intermédiaire est le PMMA comprenant des motifs acide methacrylique copolymerisés.

8. Tube selon l'une quelconque des revendications précédentes dans lequel le polyamide de la couche intérieure est le PA 6 ou le PA 6,6.

9. Tube selon l'une quelconque des revendications précédentes dans lequel la phase dipersée polyolefinique de la couche intérieure comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

10. Tube selon l'une quelconque des revendications 1 à 8 dans lequel la phase dipersée polyolefinique de la couche intérieure comprend comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

11. Tube selon l'une quelconque des revendications 1 à 8 dans lequel la phase dipersée polyolefinique de la couche intérieure comprend (i) du polypropylène et (ii) une polyoléfine qui résulte de la réaction d'un polyamide (C4) avec un copolymère (C3) comprenant du propylène et un monomère insaturé X, greffé ou copolymérisé.

12. Tube selon l'une quelconque des revendications 1 à 8 dans lequel la phase dipersée polyolefinique de la couche intérieure comprend (i) un polyéthylène de type LLDPE , VLDPE ou metallocene et (ii) un copolymère éthylène -(meth)acrylate d'alkyle -anhydride maléique.

13. Tube selon l'une quelconque des revendications 1 à 7 dans lequel le polyamide de la couche intérieure est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

## Claims

1. Polyamide-based multilayer tube comprising, in its radial direction from the outside inwards, at least:

- an outer layer formed from a polyamide,
- an interlayer formed from a blend of a fluoropolymer and a polyalkyl methacrylate,
- an inner layer, in contact with the petrol, formed from a compound with a polyamide matrix and containing a

polyolefin dispersed phase, this layer possibly containing carbon black,

the layers being successive and adhering to one another in their respective contact regions, and the polyalkyl methacrylate contains units:

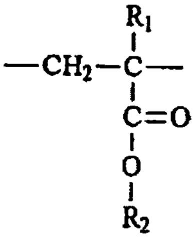

in which units (1):

$R_1$ represents H or a linear or branched alkyl radical having 1 to 20 carbon atoms; and $R_2$, identical to a different from $R_1$ when the latter does not represent H, represents a linear or branched alkyl radical having 1 to 20 carbon atoms, and units:

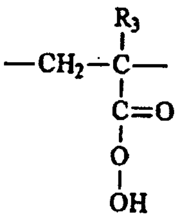

in which unit (2):

$R_3$ represents H or a linear or branched alkyl radical having 1 to 20 carbon atoms, in acid form, or its anhydride derivatives or mixtures thereof.

2. Tube according to Claim 1, in which the inner layer is replaced with two layers, one formed from a compound with a polyamide matrix and containing a polyolefin dispersed phase and the other formed from a compound with a polyamide matrix containing a polyolefin dispersed phase and carbon black, the carbon-black-filled layer being in contact with the petrol.

3. Tube according to either of the preceding claims, in which the proportion of carbon black of the inner layer is such that the surface resistivity is less than $10^6$ Ω/□.

4. Tube according to any one of the preceding claims, which comprises an additional layer consisting of manufacturing scrap or of defective tubes of the invention, this layer being between the outer layer and the interlayer or between the interlayer and the inner layer.

5. Tube according to any one of the preceding claims, in which the polyamide of the outer layer is PA-11 or PA-12.

6. Tube according to any one of the preceding claims, in which the fluoropolymer of the interlayer is a PVDF homopolymer or copolymer comprising at least 50% by weight of VF2 units, the comonomer being chosen from chlorotrifluoroethylene (GTFE), hexafluoropropylene (HFP), trifluoroethylene (VF3) and tetrafluoroethylene (TFE).

7. Tube according to any one of the preceding claims, in which the polyalkyl methacrylate of the interlayer is PMMA comprising copolymerized methacrylic acid units.

8. Tube according to any one of the preceding claims, in which the polyamide of the inner layer is PA-6 or PA-6,6.

**9.** Tube according to any one of the preceding claims, in which the polyolefin dispersed phase of the inner layer comprises (i) a high-density polyethylene (HDPE) and (ii) a blend of a polyethylene (C1) and a polymer (C2) chosen from elastomers, very low-density polyethylenes and ethylene copolymers, the (C1) + (C2) blend being cografted by an unsaturated carboxylic acid.

**10.** Tube according to any one of Claims 1 to 8, in which the polyolefin dispersed phase of the inner layer comprises (i) a high-density polyethylene (HDPE), (ii) a polymer (C2) chosen from elastomers, very low-density polyethylenes and ethylene copolymers (C2) and grafted by an unsaturated carboxylic acid, and (iii) a polymer (C'2) chosen from elastomers, very low-density polyethylenes and ethylene copolymers.

**11.** Tube according to any one of Claims 1 to 8, in which the polyolefin dispersed phase of the inner layer comprises (i) polypropylene and (ii) a polyolefin which results from the reaction of a polyamide (C4) with a copolymer (C3) comprising propylene and an unsaturated monomer X, grafted or copolymerized.

**12.** Tube according to any one of Claims 1 to 8, in which the polyolefin dispersed phase of the inner layer comprises (i) a polyethylene of the LLDPE, VLDPE or metallocene type and (ii) an ethylene/alkyl (meth)acrylate/maleic anhydride copolymer.

**13.** Tube according to any one of Claims 1 to 7, in which the polyamide of the inner layer is chosen from blends of (i) a polyamide and (ii) a copolymer having PA-6 blocks and PTMG blocks and blends of (i) a polyamide and (ii) a copolymer having PA-12 blocks and PTMG blocks, the ratio of the amount of copolymer to the amount of polyamide by weight being between 10/90 and 60/40.

## Patentansprüche

**1.** Mehrschichtiges Rohr auf der Basis von Polyamiden, das in radialer Richtung von außen nach innen mindestens umfasst:

- eine äußere Schicht, die aus einem Polyamid gebildet ist,
- eine Zwischenschicht, die aus einer Mischung aus einem Fluorpolymer und einem Alkylpolymethacrylat gebildet ist,
- eine innere Schicht, die in Kontakt mit dem Kraftstoff ist, die aus einer Mischung aus einer Polyamidmatrix gebildet ist und eine dispergierte Polyolefinphase enthält, wobei diese Schicht Ruß enthalten kann,

wobei die Schichten aufeinander folgen und in ihrer jeweiligen Kontaktzone aneinander haften, und das Alkylpolymethacrylat die Motive enthält:

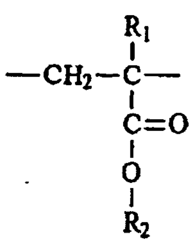

Motiv (1), worin $R_1$ H oder ein lineares oder verzweigtes Alkyl darstellt, das 1 bis 20 Kohlenstoffatome aufweist; und $R_2$, das gleich oder verschieden von $R_1$ ist, wenn dieses nicht H darstellt, ein lineares oder verzweigtes Alkyl darstellt, das 1 bis 20 Kohlenstoffatome aufweist und die Motive:

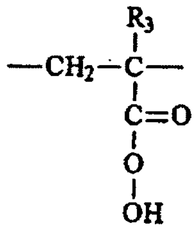

Motiv (2), worin:
$R_3$ H oder ein lineares oder verzweigtes Alkyl darstellt, das 1 bis 20 Kohlenstoffatome aufweist, in Form einer Säure oder deren Anhydridderivate oder Mischungen daraus.

**2.** Rohr nach Anspruch 1, wobei die innere Schicht durch zwei Schichten ersetzt wird, wobei eine aus einer Mischung aus einer Polyamidmatrix gebildet ist und eine dispergierte Polyolefinphase enthält und die andere aus einer Mischung aus einer Polyamidmatrix gebildet ist, die eine dispergierte Polyolefinphase und Ruß enthält, wobei die Schicht, die mit Ruß beladen ist, mit dem Kraftstoff in Kontakt ist.

**3.** Rohr nach einem der vorhergehenden Ansprüche, wobei der Anteil an Ruß der inneren Schicht so ist, dass der spezifische Oberflächenwiderstand unter $10^6$ $\Omega$ liegt.

**4.** Rohr nach einem der vorhergehenden Ansprüche, das eine zusätzliche Schicht umfasst, die aus Fabrikationsabfällen oder erfindungsgemäßen Rohren besteht, die Mängel aufweisen, wobei diese Schicht zwischen der äußeren Schicht und der Zwischenschicht oder zwischen der Zwischenschicht und der inneren Schicht liegt.

**5.** Rohr nach einem der vorhergehenden Ansprüche, wobei das Polyamid der äußeren Schicht PA 11 oder PA 12 ist.

**6.** Rohr nach einem der vorhergehenden Ansprüche, wobei das fluorierte Polymer der Zwischenschicht ein Homopolymer oder Copolymer von PVDF ist, das mindestens 50 Gew.-% der VF2-Motive enthält, wobei das Copolymer ausgewählt ist aus Chlortrifluorethylen (CTFE), Hexafluorpropylen (HFP), Trifluorethylen (VF3) und Tetrafluorethylen (TFE).

**7.** Rohr nach einem der vorhergehenden Ansprüche, wobei das Alkylpolymethacrylat der Zwischenschicht PMMA ist, das die copolymerisierten Motive der Methacrylsäure umfasst.

**8.** Rohr nach einem der vorhergehenden Ansprüche, wobei das Polyamid der inneren Schicht PA 6 oder PA 6,6 ist.

**9.** Rohr nach einem der vorhergehenden Ansprüche, wobei die dispergierte Polyolefinphase der inneren Schicht (i) ein Polyethylen hoher Dichte (HDPE) und (ii) eine Mischung eines Polyethylens (C1) und eines Polymer (C2) umfasst, ausgewählt aus Elastomeren, Polyethylenen sehr niedriger Dichte und Ethylencopolymeren, wobei die Mischung (C1) + (C2) durch eine ungesättigte Carbonsäure cogepropft ist.

**10.** Rohr nach einem der Ansprüche 1 bis 8, wobei die dispergierte Polyolefinphase der inneren Schicht (i) ein Polyethylen hoher Dichte (HDPE), (ii) ein Polymer (C2), ausgewählt aus Elastomeren, Polyethylenen sehr niedriger Dichte und Ethylencopolymeren (C2), die durch eine ungesättigte Carbonsäure gepfropft sind, und (iii) ein Polymer (C'2), ausgewählt aus Elastomeren, Polyethylenen sehr niedriger Dichte und Ethylencopolymeren, umfasst.

**11.** Rohr nach einem der Ansprüche 1 bis 8, wobei die dispergierte Polyolefinphase der inneren Schicht (i) Polypropylen und (ii) ein Polyolefin umfasst, das aus der Reaktion eines Polyamids (C4) mit einem Copolymer (C3) resultiert, das Propylen und ein ungesättigtes Monomer X enthält, das gepfropft oder copolymerisiert ist.

**12.** Rohr nach einem der Ansprüche 1 bis 8, wobei die dispergierte Polyolefinphase der inneren Schicht (i) ein Polyethylen vom Typ LLDPE, VLDPE oder Metallocen und (ii) ein Ethylencopolymer-Alkyl(meth)acrylat-Maleinsäureanhydrid umfasst.

**13.** Rohr nach einem der Ansprüche 1 bis 7, wobei das Polyamid der inneren Schicht ausgewählt ist aus den Mischungen

aus (i) Polyamid und (ii) Blockcopolymer PA 6 und Blockcopolymer PTMG und den Mischungen aus (i) Polyamid und (ii) Blockcopolymer PA 12 und Blockcopolymer PTMG, wobei das gewichtsmäßige Mengenverhältnis von Copolymer und Polyamid zwischen 10/90 und 60/40 liegt.